# EUROPEAN PATENT APPLICATION

(11) **EP 4 492 093 A1**
(43) Date of publication of application: **15.01.2025**
(21) Application number: 23184412.7
(22) Date of filing: 10.07.2023
(51) Int. Cl.: G01S 13/931, B60W 30/00

(54) **A RADAR SYSTEM FOR A COMMERCIAL VEHICLE**

(71) Applicant: KNORR-BREMSE Systeme für Nutzfahrzeuge GmbH, 80809 München (DE)
(72) Inventor: ERDRICH, Benjamin, 72250 Freudenstadt (DE); STRAUB, Kornel, 2013 Pomáz (HU); NEMETH, Huba, 1116 Budapest (HU)

(57) **Abstract**

A radar system (100) for a commercial vehicle (200) comprises a multi-mode radar sensor (110), configured to be operated with a wide short-range field of view (112) and with a narrow far-range field of view (116), wherein both fields of view (112, 116) comprise a line (30) perpendicular to a driving direction (10) of the commercial vehicle (200). The radar system (100) further comprises a processing unit (120), configured to operate the multi-mode radar sensor (110) and to detect a cross-traffic situation.

## Description

The present invention relates to a radar system for a commercial vehicle, a commercial vehicle with said radar system, a method for detecting a cross-traffic situation of a commercial vehicle, and in particular to a multi-mode radar sensors truck setup.

Commercial vehicles, and in particular medium or heavy duty trucks, or vehicle combinations including a towing vehicle and a trailer, can be difficult to maneuver due to their size, driving behavior and weight, for a human driver as well as autonomously. Commercial vehicles are therefore often equipped with a plurality of exteroceptive sensors for receiving information about an environment of the respective vehicle. Among those sensors are radar sensors, for which there are examples in the state of the art which comprise an array of antennas for transmitting a radar signal, and an array of antennas for receiving the radar signal after its reflection.

Some of these radar sensors are operable with different fields of view, often with different resolutions, in two (or more) respective modes. For such multi-mode radar sensors, two classes may be distinguished. A first class consists of radar sensors which are configured to switch between different fields of view. The multi-mode radar sensors configured to switch between different fields of view use the same antennas for the different fields of view. It is known in the state of the art to switch between the modes based on a velocity of the vehicle. For example, a detection range of e.g. 100 m with a resolution of 1 m may be employed up to a speed of 60 km per hour, and the field of view may be switched to a 200 m detection range with a resolution of 2 m if the vehicle travels above this speed.

A second class consists of multi-mode radar sensors comprising multiple antenna arrays for transmission, mounted in one radar sensor, wherein at least two transmission antenna arrays work in parallel with different fields of view and/or resolutions. For example, a first antenna array may work with a field of view of a range of 200 m and a horizontal opening angle of 10 degrees, at a resolution of 2 m, while a second antenna array may simultaneously have a field of view of a range of 40 m and an angle of 120 degrees, at a resolution of 0.8 m.

Multi-mode radar sensors are typically symmetric, i.e., their fields of view are centered around an identical line of sight. However, among the multi-mode radar sensors where two fields of view work in parallel, there are also sensors with an asymmetric setup, where the two fields of view are centered around two different lines of sight, respectively.

Publication WO 2021/221360 A1 describes the working principle of a multi-mode radar sensor in general, while US 9,395,727 B1 describes an example for an antenna layout for multi-mode radar sensors.

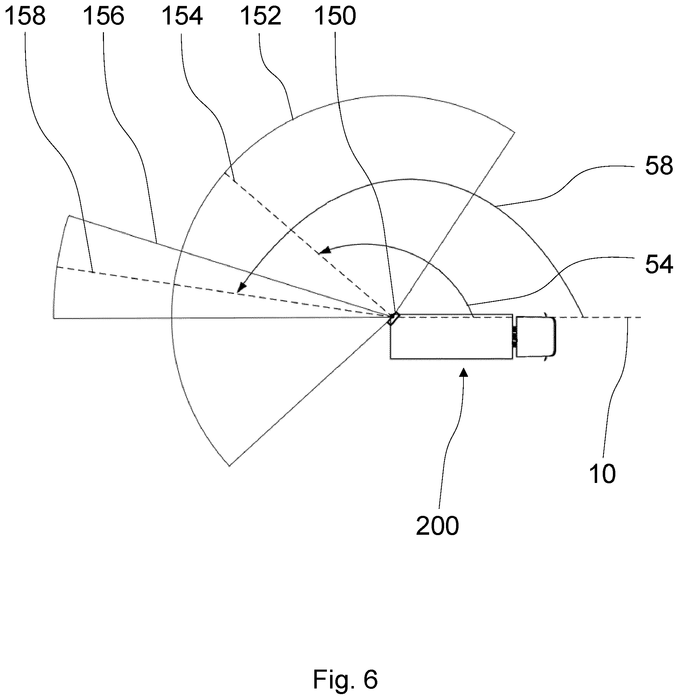

**Fig. 6** shows a conventional multi-mode radar sensor 150 mounted on a rear corner of a commercial vehicle 200. This multi-mode radar sensor 150 has a wide short-range field of view 152 with a wide opening angle for near-range object detection, and a narrow far-range field of view 156 with small opening angle for far-range object detection. The multi-mode radar sensor 150 in this example is asymmetric, i.e., with respect to a (forward) driving direction 10 of the commercial vehicle 200, an angle 54 of a line of sight 154 of the wide short-range field of view 152 is different from a corresponding angle 58 of a line of sight 158 of the narrow far-range field of view 156. For this radar sensor 150, the cone of the respective narrow far-range field of view 156 points asymmetrically towards the back to detect traffic behind the commercial vehicle 200.

Beyond an ability to detect and track traffic participants in front of and behind the commercial vehicle, there is also a need to detect and track objects at the side of the vehicle. This includes situations where the commercial vehicle stops at a traffic intersection, before crossing a street or turning into the street. In such situations, an observation of cross-traffic and especially of fast-approaching traffic is important. However, in the same situation there may also be objects in a near range, and there may be potential collisions with vulnerable road users approaching from a side and/or the rear of the commercial vehicle.

A similar situation occurs in scenarios where the commercial vehicle maneuvers, and in particular is about to reverse from a position on a driving yard or a parking lot, or to turn backwards into a street. In this situation, vehicles approaching perpendicularly to the driving direction, from a farther distance but with higher speed, as well as slower or fixed objects in a close vicinity may both present a hazard of collision.

While the mentioned radar systems offer some degree of safety in such situations, there is fundamentally a demand for systems which are capable of pushing the safety to higher levels.

At least some of the problems of the conventional systems as described before are overcome by a radar system of claim 1, a commercial vehicle of claim 11, and a method according to claim 13. The dependent claims refer to further advantageous realizations of the subject matter of the independent claims.

The present invention relates to a radar system for a commercial vehicle. The radar system comprises a multi-mode radar sensor, configured to be operated with a wide short-range field of view and with a narrow far-range field of view, wherein both fields of view comprise a line perpendicular to a driving direction of the commercial vehicle. The system further comprises a processing unit, configured to operate the multi-mode radar sensor and to detect a cross-traffic situation.

In embodiments, the commercial vehicle is a commercial truck. It may be a medium-duty or heavy-duty commercial truck, and in particular a vehicle combination comprising a towing vehicle and a trailer. Such a commercial vehicle is hard to maneuver because of its dimensions and weight, and may present multiple blind spots to a driver.

The driving direction may be a (momentary) forward or backward driving direction. Different components of the commercial vehicle may have different momentary driving directions. The driving direction may then be defined as the driving direction of the component of the commercial vehicle where the multi-mode radar sensor is installed, or is to be installed. The driving direction may also be defined as a tangent to a trajectory of the commercial vehicle.

The cross-traffic situation may be understood as an arrangement of one or more objects in a vicinity of the commercial vehicle, wherein the vicinity is situated away from a momentary axis of orientation of the commercial vehicle. The objects may be located on a side of the commercial vehicle, or may lie on or cross a (future) trajectory of the commercial vehicle. The one or more objects are understood broadly, and may comprise traffic members or infrastructure. The term object may pertain to a moving object like another vehicle or a pedestrian, or to a fixed object like a building, a road delimiter, a traffic sign, or a gate, brigde or tunnel entrance. Objects may thus be moving with respect to the commercial vehicle, as e.g. other vehicles or pedestrians which may be about to cross the trajectory of the commercial vehicle, or they may be static, like a bridge which the commercial vehicle is about to pass under. The term cross-traffic situation may also refer to a slope, or an ascending or descending hillside which the commercial vehicle is about to encounter when turning.

The multi-mode radar sensor is configured to be installed on a side of the vehicle. It may be at any height above a ground. The multi-mode radar sensor is however advantageously installed at (or close to) a corner of the vehicle. The multi-mode radar sensor may be integrated, or in a combination, with further sensors of the vehicle, such as further radar sensors, or lidar or ultrasound sensors.

The multi-mode radar sensor may be a multiple-input multiple-output, MIMO, sensor, i.e., it may comprise a first plurality of antenna elements for transmitting radar signals, and a second plurality of antenna elements for receiving reflected radio signals. With the wide short-range field of view and the narrow far-range field of view, the multi-mode radar sensor is configured for being operated in at least two modes. The two modes may be active simultaneously, i.e., the multi-mode radar sensor may be a multiple array radar sensor. In other embodiments, the same transmitting and receiving elements may be employed for both modes, and only one of the two modes is active at any given time, i.e., the multi-mode radar sensor may be a mode-switching radar sensor. When embodied as a mode-switching radar sensor, the modes may be switched based on a speed of the commercial vehicle, on a position of the commercial vehicle (e.g. on a map, before the commercial vehicle enters a crossroad, before the commercial vehicle reaches an exit or entrance, or if the commercial vehicle is about to make a turn), on an acceleration of the commercial vehicle, or on an angle of a wheel of the commercial vehicle.

The wide short-range field of view may cover an area within a broad opening angle, such as e.g. 180 degrees, 200 degrees, 150 degrees, or 135 degrees, up to a range of e.g. 20, 50, or 100 meters. A resolution of the multi-mode radar sensor in the wide short-range field of view may be higher, resolving features of about 50 cm, 1 m, or 1,5 m within the range. The narrow far-range field of view may cover an area within a restricted opening angle, such as e.g. 10 degrees, 15 degrees, or 30 degrees, up to a range of e.g. 150, 200, or 300 meters. A resolution of the multi-mode radar sensor in the narrow far-range field of view may be lower, resolving features of about 0,5 m, 1 m, 2 m, or 2,5 m within the range. In embodiments, the opening angle of the narrow far-range field of view is comprised within the opening angle of the wide short-range field of view.

It is understood that the radar system may comprise several multi-mode radar sensors as described, and that their positions on the commercial vehicle, opening angles of the respective two fields of view, and directions of lines of sight may be different for any two of these multi-mode radar sensors.

The processing unit is configured to receive sensor data from the multi-mode radar sensor and may comprise a means for beamforming and/or radar signal processing based on the place of installation of the multi-mode radar sensor. The processing unit may comprise a waveform generator for digital beamforming. Radar signal processing may include phase detection, and plot extraction, processing and combination. The processing unit may be configured for digital radar signal processing. The processing unit may be configured to search for, identify, track and/or trace an object, or a feature like a contour, in each field of view. The processing unit may be configured to identify an object or a feature in data of one field of view (e.g., the wide short-range field of view) with and object or a feature in data of the other field of view (e.g. the narrow far-range field of view, respectively).

The processing unit may be distributed over several components. There may be one component per multi-mode radar sensor. There may also be a central component which collects data from several multi-mode radar sensors of the described kind.

In embodiments, the radar system comprises a multi-mode radar sensor, configured to be installed on the vehicle. The multi-mode radar sensor is configured to be operated with a wide short-range field of view which comprises an area laterally adjacent to the commercial vehicle, and also configured to be operated with a narrow far-range field of view, centered around a line of sight which crosses the area laterally adjacent to the commercial vehicle. The radar system further comprises a processing unit, configured to operate the multi-mode radar sensor and to detect a cross-traffic situation.

The area laterally adjacent to the commercial vehicle may be taken to extend from the respective side of the commercial vehicle to 1 m or 2 m away from the commercial vehicle. Thus while the area laterally adjacent to the commercial vehicle may not cover a full length of the commercial vehicle, it does not exceed the length of the commercial vehicle. For any point in the laterally adjacent area, the line representing the distance of that point to the commercial vehicle may stand at a right angle on the respective side of the commercial vehicle. The laterally adjacent area may in particular comprise one or more blind spots of a driver of the commercial vehicle.

Optionally the radar sensor and the processing unit are configured for installation of the radar sensor at a front corner and/or at a rear corner opposite of a side of a driver's seat of the commercial vehicle.

Having the radar sensor only cover a side opposite of a driver's seat may reduce the amount of data which needs to be processed, while still providing a high level of assistance to the driver. For a driver, this side typically presents larger blind areas, and it is more difficult to assess a potential collisions with objects on this side.

Optionally the wide short-range field of view has an opening angle of at least 150 degrees, centered around a line of sight which lies at an angle within the range of 90 to 120 degrees with respect to the driving direction, and/or the narrow far-range field of view has an opening angle within a range of 15 to 30 degrees, centered around a line of sight which lies at an angle within the range of 70 to 90 degrees with respect to the driving direction.

These values may be particularly advantageous for the task of detecting both cross-traffic and close lateral objects when turning the commercial vehicle, both for human drivers and autonomous systems. In embodiments, the narrow far-range field of view may in particular have an opening angle of 20 degrees, located between 70 degrees and 90 degrees with respect to the driving direction. It is understood that the driving direction may either be in a forward or in a backward direction. It is furthermore understood that the radar system may comprise several multi-mode radar sensors as described, and directions of lines of sight may differ for any two of these multi-mode radar sensors. In particular, the indicated ranges and angles may refer to the forward driving direction for one multi-mode radar sensor, and to the backward driving direction for another multi-mode radar sensor.

Optionally a line of sight of the narrow far-range field of view is directable, and the processing unit is configured to direct the line of sight.

In embodiments, the line of sight of the narrow far-range field of view is directable within a range of angles of 70 to 90 degrees with respect to the (forwards or backwards) driving direction, advantageously when the multi-mode radar sensor is installed at or close to the front corner or the rear corner of the commercial vehicle on the respective side. The processing unit may be configured to receive instructions on how to direct the line of sight from a further system on the vehicle, such as an autonomous driving or a driving assist system.

Optionally the processing unit is configured to direct the line of sight of the narrow far-range field of view based on a position of the commercial vehicle, a speed of the commercial vehicle, an acceleration of the commercial vehicle, and/or a steering angle of the commercial vehicle.

The processing unit is then configured to receive respective data for this task. This data may be obtained from other sensors on the commercial vehicle. Some of the data may be obtained e.g. as an angle of one or more wheels of the commercial vehicle. On some types of commercial vehicles in the state of the art, at least some of this data may be routinely made available to radar or other sensor systems. However, the processing unit may also be configured to request the respective data, e.g. via a CAN.

The processing unit may be configured to estimate, based on the received data, a pose and/or a short-term trajectory of the commercial vehicle, and direct the line of sight of the narrow far-range field accordingly. In particular, the processing unit may be configured to direct the line of sight such that it lies at a lower angle (i.e., is more aligned) with the driving direction when the commercial vehicle is slowing down at a crossroad without making a full stop, and at a higher angle (such that the line of sight runs closer to a perpendicular direction) if the commercial vehicle makes a full stop, and/or when the commercial vehicle is about to turn rather than to merely cross at the cross-road. The estimate may rely on a time series of the mentioned data, and in particular on a first derivative.

Optionally the processing unit is configured to direct the line of sight of the narrow far-range field of view based on a presence of a trailer of the commercial vehicle, a weight of the commercial vehicle, a planned movement of the commercial vehicle, or a derivative of a trajectory of the commercial vehicle.

A particularly advantageous angle for the line of sight of the narrow far-range field of view may depend on the dimensions of the commercial vehicle, and on how fast the commercial vehicle may be capable of moving onto and away from a crossing or a similarly dangerous zone. An autonomous or driving assist system present on the commercial vehicle may be configured to provide at least some of this data. A length of the commercial vehicle (which may depend on a presence of the trailer, or on a type of the trailer) may also be determined from data of the multi-mode radar sensor originating from the wide short-range field of view, as the wide short-range field of view may be configured to cover the full side of the commercial vehicle, including the trailer.

Optionally the processing unit is configured to issue a warning signal based on a fast-approaching object in the narrow far-range field of view, a moving object in the wide short-range field of view, and/or a potential collision of the commercial vehicle with a static object.

The warning may be in form of an acoustic, haptic or optical warning to a driver, or in form of a signal issued to an autonomous driving system or driving assist system present on the vehicle. Especially for fully autonomous commercial vehicles, the signal may be broadcast to a remote station. The fast-approaching object may in particular be a cross-traffic member. The moving object in the wide short-range field of view may be a cyclist, vehicle or pedestrian in close vicinity of the commercial vehicle. The static object may be in the wide close range field of view, in the narrow far-range field of view, or in both fields of view. The static object may be (a part of) a building, or a traffic sign or traffic light. The static object may also be a bridge, a gate, or a tunnel, or respectively an entrance into a tunnel.

Optionally, the multi-mode radar sensor and the processing unit are configured to provide a free space representation, a detection of infrastructure, a detection of boundary lines, and/or a height information for determining if the commercial vehicle can drive below an object.

Thus, the multi-mode radar sensor and the processing unit may be configured to determine data for a representation of free spaces in an area around the commercial vehicle. In particular, the processing unit may be configured to collect data for generating an occupancy grid of the area. Infrastructure may in particular pertain to road infrastructure, such as lanes, exits and entries, driveways, bridges, gates, or tunnels. The multi-mode radar sensor and the processing unit may be configured for determining the height information for bridges, gates, or tunnels. For this, the multi-mode radar system may be configured to determine an elevation angle of the respective bridge, gate, or tunnel, and the processing unit may be configured for determining the height information, which may be an estimate of an elevation, based on the elevation angle and a distance to the respective object by means of triangulation.

Optionally the radar system comprises a further radar sensor configured to be installed on the commercial vehicle and to be operated with a field of view centered around the forward and/or backward driving direction of the commercial vehicle, wherein the field of view of the further radar sensor has an overlap with the wide short-range field of view of the multi-mode radar sensor.

Safety of the commercial vehicle requires large areas around the commercial vehicle to be covered, and it may be advantageous to combine the proposed multi-mode radar sensor in particular with radar sensors, possibly multi-mode, which are to be installed at a central position of a front and/or a back of the commercial vehicle.

Optionally the overlap covers an angle of at least 15 degrees, especially for a radar sensor stipulated for installation at a central position of the front or the back of the commercial vehicle. An overview of at least 15 degrees may be advantageous for cross-checking a detection of an object close to boundaries of the respective fields of view.

Embodiments further relate to a commercial vehicle, comprising the proposed radar system.

The commercial vehicle may be a commercial truck. It may be a medium-duty or heavy-duty commercial truck, and in particular a vehicle combination comprising a towing vehicle and a trailer. The commercial vehicle may be configured to determine, via sensors and/or remote communication, a position of the commercial vehicle, a speed of the commercial vehicle, an acceleration of the commercial vehicle, and/or a steering angle of the commercial vehicle. The commercial vehicle may also be configured to determine, via sensors and/or remote communication, a presence of a trailer of the commercial vehicle, a weight of the commercial vehicle, a planned movement of the commercial vehicle, or a derivative of a trajectory of the commercial vehicle. The commercial vehicle may be configured to provide some or all of this data to the processing unit of the radar system. The commercial vehicle may be configured to direct, via the processing unit of the radar system, the line of sight of the narrow far-range field of view based on some of all of this data.

Optionally the commercial vehicle comprises a planning module, configured to generate planning data for an autonomous movement of the commercial vehicle and to receive data from the radar system, wherein the planning module is furthermore configured to compare a travel envelope of the commercial vehicle with the data, and/or to change a threshold for a warning issued by the processing unit based on a driving situation.

The travel envelope, or volume to be crossed by the commercial vehicle, may in particular be compared with building data, and in particular with a height of a bridge, a gate, or a tunnel entrance.

Embodiments further relate to a method for detecting a cross-traffic situation of a commercial vehicle. The method comprises monitoring, by a multi-mode radar sensor, a wide short-range field of view and a narrow far-range field of view, wherein both fields of view comprise a line perpendicular to a driving direction of the commercial vehicle. The method further comprises detecting, based on data received by the multi-mode radar sensor, the cross-traffic situation.

In embodiments, the method comprises monitoring, by a multi-mode radar sensor, a wide short-range field of view comprising an area laterally adjacent to the commercial vehicle. The method further comprises monitoring, by the multi-mode radar sensor, a narrow far-range field of view which is centered around a line of sight that crosses the area laterally adjacent to the commercial vehicle.

The monitoring may be executed with the two fields of view in parallel (i.e., simultaneously at the same time), or sequentially.

This method may also be implemented in software or a computer program product and the order of steps may not be important to achieve the desired effect. Embodiments of the present invention can, in particular, be partially implemented by software or a software module in an ECU. Therefore, embodiments relate also to a computer program product having a program code for performing the method, when the computer program is executed on a processor.

Important aspects of the proposed radar system and method may also be summarized as follows.

The radar system for the commercial vehicle may comprise one or more multi-mode radar sensors at the front and/or rear corner of the vehicle that have a wide short-range field of view and a narrow far-range field of view. The narrow far-range field of view may be steerable or turnable in the direction the commercial vehicle is turning into. The setup yields the possibility to sense and track cross traffic at the front and/or on the back of the vehicle. Based on the detected cross traffic a function can be realized that can supports the driver by informing and/or warning and/or acting in case there is a potential collision.

In some embodiments, the multi-mode radar sensors are located at or near the front of the vehicle, looking basically sidewards, such that it includes a line perpendicular to a side of the commercial vehicle. Using a sufficiently large opening angle, and/or turning a line of sight slightly backwards, a whole side of the commercial vehicle may be covered in the wide short range field of view. The narrow far-range field of view may extend perpendicular to the driving direction, or have a line of sight slightly turned into the driving direction.

In some embodiments, the multi-mode radar sensors are located at or near the back, and in particular at a rear corner, of the vehicle. In this position, the multi-mode radar sensor may be looking slightly forwards.

By means of the radar system, fast-approaching traffic can be detected early in cross-traffic events. A central aspect is that each sensor combines both the wide short-range field of view and the narrow far-range field of view. Besides enabling the simultaneous tasks of detecting both fast-approaching objects further away as well as objects in a close vicinity of the commercial vehicle, the reduction to one multi-mode radar sensors instead of two single-mode radar sensors may save costs, integration effort, and space for integration.

In embodiments, the whole side of the commercial vehicle can be covered by the wide short- range field of view. In contrast, in the narrow far-range field of view, oriented roughly or exactly perpendicular to the driving direction, fast-approaching traffic can be detected earlier, especially in turns or during backing events.

Multi-mode radar sensors mounted at the front corners of the commercial vehicle can be mounted in combination with any other sensor combination, like front camera, front radar, central radar in the back, normal (non-multi-mode) radar facing backwards on the rear corners, multi-mode radar facing backwards on the rear corners, surround view cameras, and lidars around the commercial vehicle.

Multi-mode radar sensors mounted at the rear corners of the commercial vehicle can be mounted in combination with any other sensor combination like front camera, front radar, central radar in the back, normal (non-multi-mode) radar at the front corners, surround view cameras and lidars around the vehicle.

The processing unit may be configured to detect and track objects. The processing unit may also be configured to provide a free space representation (e.g. in form of an occupancy grid). The processing unit may also be configured to provide a detection of infrastructure and boundary lines. The processing unit may also be configured to provide height information to determine if the commercial vehicle can drive below a detected object (like a building, a bridge, or a gate), or into a tunnel.

The processing unit of the radar system, or a planning module of the vehicle connected with the processing unit of the radar system, may be configured to provide information or a warning to a driver of the commercial vehicle. The warning may be a visual, haptic, or acoustic signal. The processing unit of the radar system, or a planning module of the vehicle connected with the processing unit of the radar system, may be configured to provide braking or steering intervention. In particular, the planning module may be configured to change a planned trajectory of the commercial vehicle, or initiate an emergency braking.

Some advantages of the proposed radar system will be outlined in the following.

The radar system of the proposed kind can be particularly useful for the task of simultaneously detecting cross-traffic and objects in a close vicinity of the commercial vehicle. This is basically made possible by having the narrow far-range field of view crossing the wide-range field of view, with both fields of view comprising a line perpendicular to the driving direction of the vehicle. In particular, it has turned out that this arrangement generally presents an advantageous trade-off between efficiency and the amount of data which needs to be processed. The radar system can improve the safety of the commercial vehicle in particular at cross-roads, entrances and exits. It is generally advantageous to have the multi-mode radar sensor not at some half-way position on the side of the commercial vehicle, but rather at a corner.

The radar system can be used (or directly provide) driver assistant or autonomous driving functions by covering large portions of the environment around the vehicle.

Typically, different functions require different detection distances in different directions. The proposed radar system can be configured to detect and track traffic participants objects at the side of the commercial vehicle. It may further be configured to detect and track traffic participants in the front and the rear of the commercial vehicle. The proposed radar system can therefore be advantageous in situations where the commercial vehicle stops at a traffic intersection and a driver assistant system is supposed to support a driver of the commercial vehicle in crossing the street or turning into the street. For this, the proposed radar system can provide an observation of cross traffic and especially of faster approaching traffic, which can be important in order to be able to avoid cross traffic accidents in these situations. The proposed radar system can provide this within a far range perpendicular to the driving direction. At the same time, the proposed radar system can also detect objects in the near range, and may be configured to inform a driver, a planning system, or some other superordinate system on the commercial vehicle about potential collisions with vulnerable road users approaching the commercial vehicle from a side. For this, the proposed radar system can be configured to measure in a near range with a wide opening angle.

The proposed radar system can also provide assistance in situations where the commercial vehicle intends to leave backwards from a driving yard or from a parking lot, or when it turns backwards into a street. The proposed radar system can provide assistance in cross-traffic situations by detecting vehicles approaching perpendicular to the driving direction from a far distance but with higher speed. Again, at the same time the proposed radar system can inform about potential collisions with any object in a wide near range by a side of the commercial vehicle.

Some examples of the systems and/or methods will be described in the following by way of examples only, and with respect to the accompanying figures, in which:
- Fig. 1: depicts a radar system for a commercial vehicle according to an embodiment the present invention;
- Fig. 2: depicts a further embodiment of the radar system with two multi-mode radar sensors at front corners of the commercial vehicle.
- Fig. 3: depicts a further embodiment of the radar system with two multi-mode radar sensors at rear corners of the commercial vehicle.
- Fig. 4: depicts a further embodiment of the radar system with two multi-mode radar sensors at front corners of the commercial vehicle, and back-facing multi-mode radar sensors at rear corners of the commercial vehicle.
- Fig. 5: shows steps of a method for detecting a cross-traffic situation of a commercial vehicle according to the present invention.
- Fig. 6: shows fields of view of two conventional multi-mode radar sensors mounted on a rear end of a commercial vehicle.

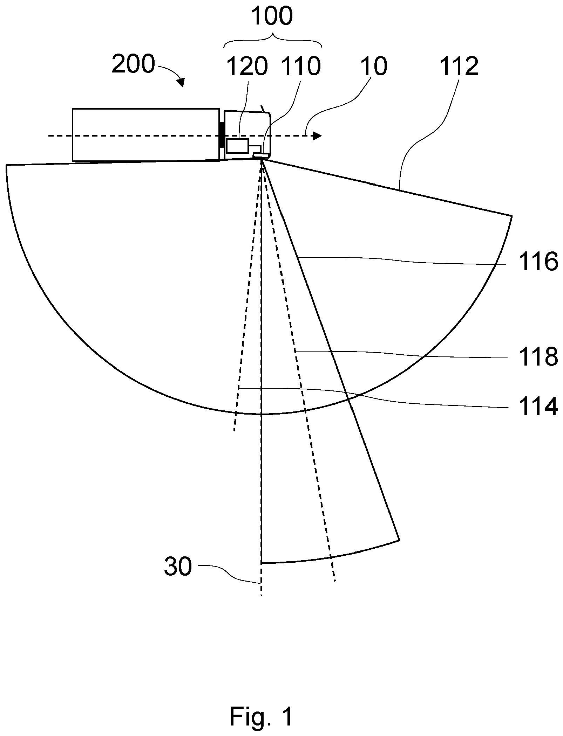

**Fig. 1** depicts a radar system 100 for a commercial vehicle 200 according to an embodiment of the present invention. The radar system 100 comprises a multi-mode radar sensor 110, configured to be installed on the commercial vehicle 200, and to be operated in two modes, wherein one mode has a wide short-range field of view 112, and another mode has a narrow far-range field of view 116, with both fields of view 112, 116 comprising a line 30 perpendicular to a driving direction 10 of the commercial vehicle 200. The radar system 100 comprises a processing unit 120, configured to operate the multi-mode radar sensor 110 and to detect a cross-traffic situation.

The commercial vehicle 200 in this embodiment is a heavy-duty truck with a towing vehicle and a trailer. The radar system 100 is installed on the commercial vehicle 200. In particular, the multi-mode radar sensor 110 is installed at a front corner opposite of a side of a driver's seat of the commercial vehicle 200. The wide short-range field of view 112 has an opening angle of 165 degrees, centered around a line of sight 114 which lies at an angle of 95.5 degrees with respect to the driving direction. The narrow far-range field of view 116 has an opening angle of 20 degrees, centered around a line of sight 118 which lies at an angle 80 degrees with respect to the driving direction 10.

The line of sight 118 of the narrow far-range field of view 116 may be directable, and the processing unit 120 may be configured to direct the line of sight 118. The processing unit 120 of the radar system 100, or a planning unit of an autonomous driving or driving assist system (not depicted) of the commercial vehicle 200, may be configured to direct (within a restricted range of angles) the line of sight 118 of the narrow far-range field of view 116 based on a trajectory and/or a speed of the commercial vehicle 200 in a turn.

The embodiment depicted offers the possibility to sense and track cross traffic, in particular at the front of the commercial vehicle 200. Based on the detected cross traffic, a function can be realized that can support the driver by informing and/or warning and/or acting in case there is a potential collision.

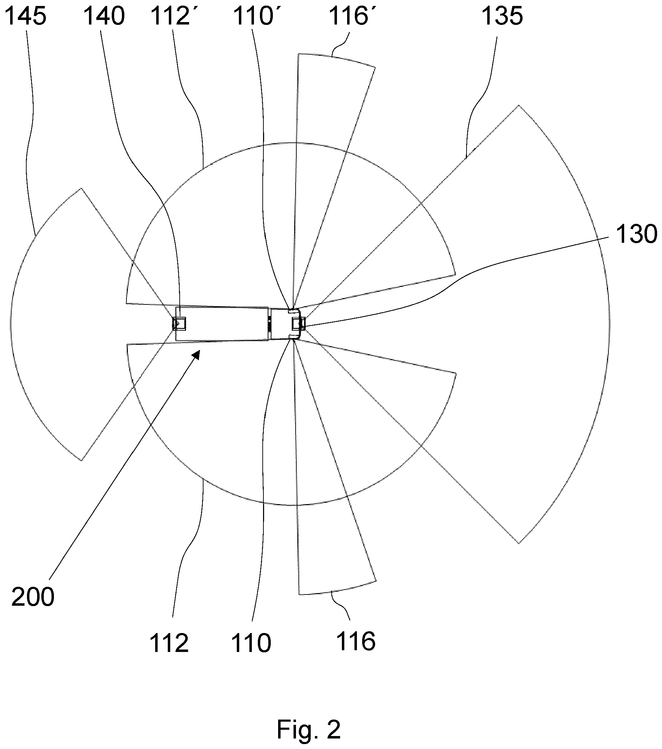

**Fig. 2** depicts a further embodiment of the radar system 100. In this embodiment, the radar system 100 comprises a first multi-mode radar sensor 110 installed at a right front corner and a second multi-mode radar sensor 110' installed at a left front corner of the commercial vehicle 200.

An advantage of the depicted embodiment with two multi-mode radars 110, 110' located at the front of the commercial vehicle 200 is that the whole respective side of the commercial vehicle 200 can be covered in near range, while in the far range, perpendicular to the driving direction, fast approaching traffic can be detected early during cross traffic events.

For both multi-mode radar sensors 110, 110', the line of sight (not depicted in this figure) of the wide short-range field of view 112, 112' is turned backwards by more than 90 degrees with respect to the forward driving direction. Also, for both multi-mode radar sensors 110, 110', the line of sight of the narrow far-range field of view 116, 116' is turned by 90 +/-15 degrees.

The radar system 100 further comprises a first further radar sensor 130 installed at a central position of a front of the commercial vehicle 200, e.g. at a front bumper. The first further radar sensor 130 covers a field of view 135 in the forward driving direction with an opening angle of 45 degrees and a range as the narrow far-range fields of view 116, 116' of the first and the second multi-mode radar sensors 110, 110'. The field of view 135 of the first further radar sensor 130 has an overlap with the wide short-field fields of view 112, 112' of both the left and the right multi-mode radar sensor 110, 110'. It is advantageous that each overlap has an opening angle of about 30 degrees, respectively. In some embodiments, the first further radar sensor 130 may also be a multi-mode radar sensor, with a further narrow far-range field of view extending to a range beyond that depicted in this figure.

The radar system 100 further comprises a second further radar sensor 140 installed at a central position in a back of the commercial vehicle 200, e.g. at a rear bumper. The second further radar sensor 140 covers a field of view 145 in the backward driving direction with an opening angle of 45 degrees and a range as the wide short-range fields of view 112, 112' of the first and the second multi-mode radar sensors 110, 110'. The range of the second further sensor 140 is thus shorter than the range of the first further sensor 130, which may be sufficient since typical reversing speeds of the commercial vehicle 200 may be much lower than forward driving speeds. In some embodiments, the second further radar sensor 140 may also be a multi-mode radar sensor, with a narrow far-range field of view extending to a range beyond that depicted in this figure.

In other embodiments, the multi-mode radar sensors 110, 110' mounted at the front corners can be combined with any other sensors, like a camera, in particular a front camera, a lidar, an ultrasound sensor or another front or back radar. Such other radar sensors may be normal (single mode, or non-multi-mode) or multi-mode radar devices, especially when facing backwards, where they may be installed on the rear corners of the commercial vehicle. In embodiments, the radar system may be combined with surround view cameras and/or lidars around the commercial vehicle 200.

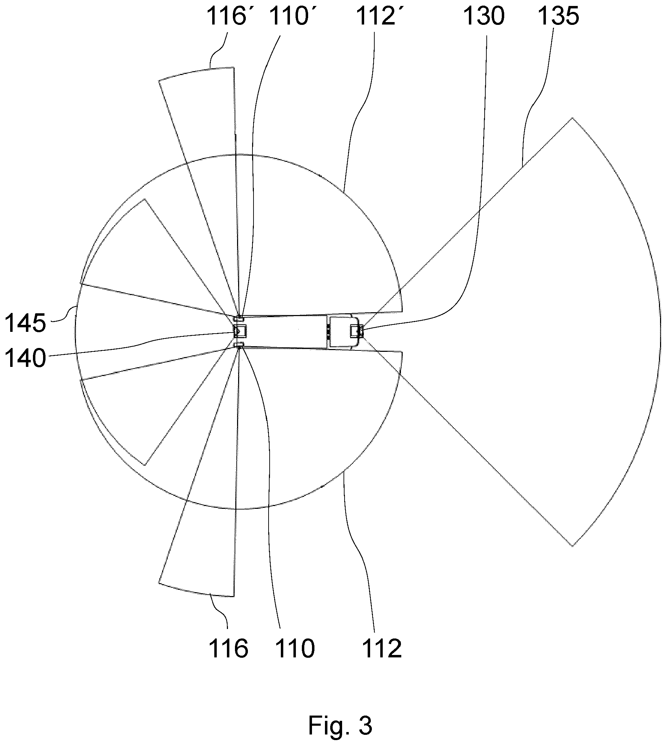

**Fig. 3** depicts a further embodiment of the radar system 100. In this embodiment, the radar system 100 comprises a first multi-mode radar sensor 110 installed at a right rear corner and a second multi-mode radar sensor 110' installed at a left rear corner of the commercial vehicle 200. Other embodiments may only comprise one multi-mode radar sensor 110 at either the left or the right rear corner.

An advantage of the depicted embodiment with two multi-mode radars 110, 110' located in the rear part, and in particular on a trailer, of the commercial vehicle 200 is that the whole side of the commercial vehicle 200 can be covered in near range, while in the far range, perpendicular to the driving direction, fast approaching traffic can be detected early during cross traffic events, in particular when reversing.

For both multi-mode radar sensors 110, 110', the line of sight of the wide short-range field of view 112, 112' is turned backwards by 70 to 90 degrees with respect to the forward driving direction. Also, for both multi-mode radar sensors 110, 110', the line of sight of the narrow far-range field of view 116, 116' is turned by 90 +/-15 degrees.

This embodiment again comprises a first further radar sensor 130 and a second further radar sensor 140 as in the embodiment shown in Fig. 2. In further embodiments, the radar system 100 may comprise other radar sensors, or it may be integrated with other sensors (cameras, lidar, ultrasound), which may in particular also be at the front (on the towing vehicle) of the commercial vehicle 200.

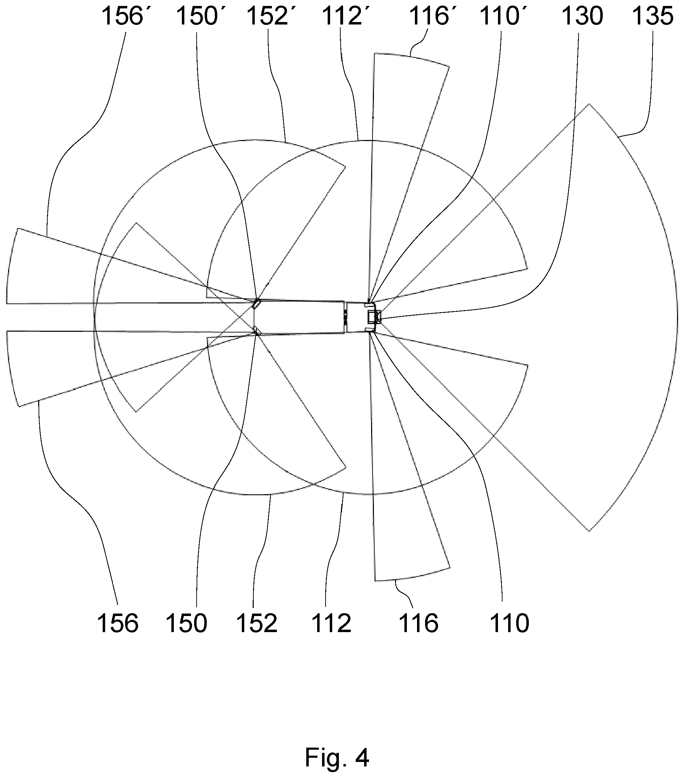

**Fig. 4** depicts a further embodiment of the radar system 100. In this embodiment, the radar system 100 comprises a first multi-mode radar sensor 110 installed at a right front corner and a second multi-mode radar sensor 110' installed at a left front corner of the commercial vehicle 200, similarly as in Fig. 2.

The radar system 100 further comprises two multi-mode radar sensors 150, 150' mounted on the two rear corners of the commercial vehicle 200, respectively. These multi-mode radar sensors 150, 150' also have a wide short-range field of view 152, 152' with a wide opening angle for near-range object detection, and a narrow far-range field of view 156, 156' with small opening angle for far-range object detection. The lines of sight of the wide short-range fields of view 152, 152' and the lines of sight of the respective narrow far-range fields of view 156, 156' are again not aligned. The cones of the narrow far-range fields 156, 156' of the two radar sensors 150, 150' at the rear end of the commercial vehicle 200 point to backwards, rather than comprising the perpendicular direction. A line of sight, or central line, of the wide short-range field of view 152, 152' of each of the rear radar sensors 150, 150' is turned backwards by 100 to 170 degrees. The line of sight, or central line, of the narrow far-range field of view 156, 156' is turned by 180 +/-20 degrees. With this setup, the rear radar sensors 150, 150' are configured to detect traffic behind the commercial vehicle 200. An advantage of using multi-mode radars 150, 150' located at the back of the commercial vehicle 200 looking backwards is that whole rear and side area of the commercial vehicle 200 can be covered in near range, while in the far range, fast approaching traffic parallel to the driving direction can be detected earlier e.g. for lane change scenarios. Again, the configuration of all radar sensors 110, 110', 150, 150' for being operated in multiple modes may save costs, integration effort and space for integration.

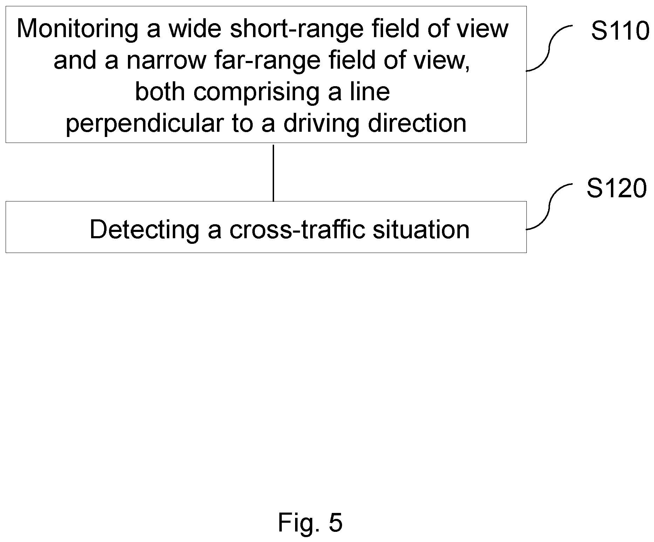

**Fig. 5** depicts a flow diagram of a method for detecting a cross-traffic situation of a commercial vehicle 200. The method comprises monitoring S110, by a multi-mode radar sensor 110, a wide short-range field of view 112 and a narrow far-range field of view 116, wherein both fields of view 112, 116 comprise a line 30 perpendicular to a driving direction 10 of the commercial vehicle 200. Monitoring the wide short-range field of view 112 may be performed simultaneously with monitoring the narrow far-range field of view 116. In other embodiments, monitoring the wide short-range field 112 of view may be performed in alternation with monitoring the narrow far-range field of view 116, and switching between these two modes may be based on a speed, a position, an acceleration or a wheel angle of the commercial vehicle 200. In other embodiments, monitoring of the narrow far-range field of view 116 may be switched on when the commercial vehicle 200 is about to turn in the respective direction. In embodiments, monitoring of the far-range field of view 116 is switched on when the commercial vehicle 200 approaches a crossroad, or a similar danger zone where side traffic is to be expected. The monitoring of the narrow far-range field of view 116 may be switched off when the commercial vehicle 200 travels in a straight direction, or away from crossroads.

The method further comprises detecting S120, based on data received by the multi-mode radar sensor 110, the cross-traffic situation.

This method may also be a computer-implemented method. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

Furthermore, while each embodiment may stand on its own as a separate example, it is to be noted that in other embodiments the defined features can be combined differently, i.e. a particular feature described in one embodiment may also be realized in other embodiments. Such combinations, if within the scope of the claims, are covered by the disclosure herein unless it is stated that a specific combination is not intended.

### LIST OF REFERENCE SIGNS

- 10: driving direction
- 30: perpendicular direction
- 54, 58: angles
- 100: radar system
- 110: multi-mode radar sensor
- 112: wide short-range field of view
- 114: line of sight
- 116: narrow far-range field of view
- 118: line of sight
- 120: processing unit
- 130: first further radar sensor
- 135: field of view
- 140: second further radar sensor
- 145: field of view
- 150: multi-mode radar sensor
- 152: wide short-range field of view
- 154: line of sight
- 156: narrow far-range field of view
- 158: line of sight
- 200: commercial vehicle
- S110, S120: steps of a method

## Claims

1. A radar system (100) for a commercial vehicle (200),
**characterized by:**
a multi-mode radar sensor (110), configured to be operated with a wide short-range field of view (112) and with a narrow far-range field of view (116), wherein both fields of view (112, 116) comprise a line (30) perpendicular to a driving direction (10) of the commercial vehicle (200); and
a processing unit (120), configured to operate the multi-mode radar sensor (110) and to detect a cross-traffic situation.

2. The radar system (100) according to claim 1,
**characterized in that**
the multi-mode radar sensor (110) and the processing unit (120) are configured for installation of the multi-mode radar sensor (110) at a front corner and/or at a rear corner opposite of a side of a driver's seat of the commercial vehicle (200).

3. The radar system (100) according to any one of the preceding claims,
**characterized in that**
the wide short-range field of view (112) has an opening angle of at least 150 degrees, centered around a line of sight (114) which lies at an angle within the range of 90 to 120 degrees with respect to the driving direction (10), and/or
the narrow far-range field of view (116) has an opening angle within a range of 15 to 30 degrees, centered around a line of sight (118) which lies at an angle within the range of 70 to 90 degrees with respect to the driving direction (10).

4. The radar system (100) according to any one of the preceding claims,
**characterized in that**
a line of sight (118) of the narrow far-range field of view (116) is directable, and the processing unit (120) is configured to direct the line of sight (118).

5. The radar system (100) according to claim 4,
**characterized in that**
the processing unit (120) is configured to direct the line of sight (118) of the narrow far-range field of view (116) based on at least one of the following:
- a position of the commercial vehicle (200),
- a speed of the commercial vehicle (200),
- an acceleration of the commercial vehicle (200),
- a steering angle of the commercial vehicle (200).

6. The radar system (100) according to claim 4 or claim 5,
**characterized in that**
the processing unit (120) is configured to direct the line of sight (118) of the narrow far-range field of view (116) based on at least one of the following:
- a presence of a trailer of the commercial vehicle (200),
- a weight of the commercial vehicle (200),
- a planned movement of the commercial vehicle (200),
- a derivative of a trajectory of the commercial vehicle (200).

7. The radar system (100) according to any one of the preceding claims,
**characterized in that**
the processing unit (120) is configured to issue a warning signal based on at least one of the following:
- a fast-approaching object in the narrow far-range field of view (116),
- a moving object in the wide short-range field of view (112),
- a potential collision of the commercial vehicle (200) with a static object.

8. The radar system (100) according to any one of the preceding claims,
**characterized in that**
the multi-mode radar sensor (110) and the processing unit (120) are configured to provide one of the following:
- a free space representation,
- a detection of infrastructure,
- a detection of boundary lines,
- a height information for determining if the commercial vehicle (200) can drive below an object.

9. The radar system (100) according to any one of the preceding claims,
**characterized in that**
the radar system (100) comprises a further radar sensor (130, 140) configured to be operated with a field of view (135, 145) centered around the forward or backward driving direction (10) of the commercial vehicle (200), wherein the field of view (135, 145) of the further radar sensor (130, 140) has an overlap with the wide short-range field of view (112) of the multi-mode radar sensor (110).

10. The radar system (100) according to claim 9,
**characterized in that**
the overlap covers an angle of at least 15 degrees.

11. A commercial vehicle (200),
**characterized by**
the radar system (100) according to any one of the preceding claims.

12. The commercial vehicle (200) of claim 10 or claim 11,
wherein the commercial vehicle (200) comprises a planning module, configured to generate planning data for an autonomous movement of the commercial vehicle (200), and to receive data from the radar system (100),
**characterized in that**
the planning module is configured to at least one of the following:
- compare a travel envelope of the commercial vehicle (200) with the data from the radar system (100),
- change a threshold for a warning issued by the processing unit (120) based on a driving situation.

13. A method for detecting a cross-traffic situation for a commercial vehicle (200),
**characterized by:**
monitoring (S110), by a multi-mode radar sensor (110), a wide short-range field of view (112) and a narrow far-range field of view (116), wherein both fields of view (112, 116) comprise a line (30) perpendicular to a driving direction (10) of the commercial vehicle (200); and
detecting (S120), based on data received by the multi-mode radar sensor (110), the cross-traffic situation.
